# EUROPEAN PATENT APPLICATION

(11) **EP 4 345 805 A1**
(43) Date of publication of application: **03.04.2024**
(21) Application number: 22198010.5
(22) Date of filing: 27.09.2022
(51) Int. Cl.: G09G 3/32, G06T 7/80, H04N 9/75, H04N 13/279

(54) **METHODS AND SYSTEMS FOR CONTROLLING THE APPEARANCE OF A LED WALL AND FOR CREATING DIGITALLY AUGMENTED CAMERA IMAGES**

(71) Applicant: Galijasevic, Senad, 10000 Zagreb (HR)
(72) Inventor: Galijasevic, Senad, 10000 Zagreb (HR)
(74) Representative: Meissner Bolte Partnerschaft mbB

(57) **Abstract**

The present invention proposes a method, preferably computer-implemented method, for controlling the appearance of a LED wall 11 dependent on a viewing angle of a camera 2 relative to the LED wall 11, the method comprising: determining a LED wall viewing angle α, αₕ, αᵥ of the camera 2 relative to the LED wall 11; and adjusting the appearance of the LED wall 11 based on the determined LED wall viewing angle α, αₕ, αᵥ. Furthermore, a method for creating digitally augmented camera images based on input images containing image data of a LED wall 11 captured with a camera 2 and a control system for controlling the appearance of a LED wall 11 dependent on a viewing angle of a camera 2 relative to the LED wall 11 are proposed.

## Description

The present invention relates to a method for controlling the appearance of a LED wall dependent on a viewing angle of a camera according to the subject-matter of claim 1, a method for creating digitally augmented camera images based on input images captured by a digital camera according to the subject-matter of claim 2 and to corresponding (processing) systems according to the subject-matter of claims 11 and 13.

Extended Reality is an umbrella term that covers various technologies that combine real-world camera footage captured by digital cameras with virtual content image data, such as computer-generated virtual graphics. It includes Virtual Reality, Augmented Reality, and Mixed Reality technologies. For the production of said effects, the actual camera footage needs to be combined with the rendered virtual graphics or virtual content image data. The virtual content image data needs to be rendered in the correct perspective so that the combination of actual camera footage and the virtual content image data appear consistent. To ensure the correct rendering of virtual content image data, the camera position and/or orientation need to be determined with great spatial and temporal precision.

In XR, the goal is often to combine the real camera footage with the virtual content image data in such a way that the virtual elements blend in seamlessly. This way, the audience watching the content enjoys the added virtual elements, yet feels like everything they are seeing is real. To achieve this goal, the virtual content image data must be rendered to match the real footage as closely as possible. For example, if the real-world camera uses an optical lens that distorts the captured images, then the virtual content image data should also be rendered distorted, imitating the real lens's effect in the captured images.

Virtual Reality effects have been achieved using so called green screens. These are areas covered uniformly with a specific shade of green that are placed in the background of a scene to be captured with a camera. Other colors can and have been used, but green is the most common. In the captured images, the specific shade of background color or its hue can be recognized and substituted by other video content. This allows the insertion of virtual content image data as the background to the actors and objects captured in the scene. The process involves the selection of areas of the captured images based on the prevalence of a specific color or hue present on the background screen (such as a specific tone of green in the case of green screens), which are set transparent, allowing virtual content image data to be inserted into the scene. This process is referred to as chroma keying.

A problem arising with the use of green screens and chroma keying is associated with the color based selection of the image areas that are to be substituted with virtual content image data. In a real life scenario, the green background in the camera images does not have a perfectly uniform color tone or hue, due to uneven lighting and color distortions caused by the camera itself. In light of this, it is expedient to apply a certain tolerance in the color selection for chroma keying. The degree of tolerance, however, has to be chosen carefully. If the color or hue selection is overly narrow, not all areas which are to be augmented by virtual content image data will be selected, so that green artefacts will be visible in the augmented images. An excessive tolerance in the color or hue selection may lead to an inadvertent removal of image content.

A further challenge in using green screens is to adjust the lighting so that the actual footage matches the virtual graphics. This is especially difficult when the graphics are changing over time. For example, if a light source in the virtual graphics moves while the actual real-world light source remains static, the resulting footage that combines real and virtual elements looks unnatural.

For these reasons, among others, LED walls are preferred over green screens when it comes to producing a high quality virtual studio. LED walls are digital displays consisting of large numbers of individual light emitting diodes (LEDs) arranged in a grid, i.e., a LED grid.

Extended reality technology with LED walls was recently popularized by Lucasfilm in the hit Star Wars series "The Mandalorian" and since then it has been rapidly gaining popularity, especially during the COVID-19 pandemic, which forced the movie-industry to rethink the way the movies are made and comply with safety restrictions to reduce the amount of people on set. This new XR technology is a modern day replacement for green screen studios.

A problem arising from the use of LED walls is associated with the limited dimension of LED walls. LED walls of satisfactory quality are rather expensive. Thus, budget limitations oftentimes dictate the use of smaller LED walls, which do not fill the entire background of a scene shot with a camera - in particular if the camera is positioned at a certain distance from the LED wall. In such cases, the shot images have to be augmented with virtual content image data in areas outside the LED wall, to artificially extend the LED wall graphics to areas of the camera image which are not already showing the LED wall. If the color of the virtual content image data does not closely match the colors on the LED walls, undesired artifacts will be visible in the digitally augmented camera images at the borders of the LED wall.

A further problem associated with the use of LED walls is the fact that the brightness and/or color of the LEDs of the LED wall may vary with the angle under which the LED wall is viewed. If the angle of a camera relative to a LED wall surface is varied during the shooting of a scene, the brightness and color of the area inside the LED wall may change. This further aggravates a satisfactory match between virtual content image data and input image data and may give rise to artifacts in the digitally augmented camera images, particularly at the borders of the LED wall.

In light of the above, it is evident that there is still a desire for improvement of XR technology using LED walls. It is thus an object of the present invention to provide solutions for further enhancing the quality of camera images depicting LED walls. In particular, it is an object of the present invention to reduce visual artifacts in camera images depicting LED walls, and of digitally augmented camera images containing depictions of LED walls.

The above object is solved by a method for controlling the appearance of a LED wall dependent on a viewing angle of a camera according to the subject-matter of claim 1, a method for creating digitally augmented camera images based on input images captured by a digital camera according to the subject-matter of claim 2, by a control system for controlling the appearance of a LED wall dependent on a viewing angle of a camera relative to the LED wall according to the subject-matter of claim 11, and by a digital image processing system for creating digitally augmented camera images based on input images containing image data of a LED wall according to the subject-matter of claim 13. Preferred embodiments of the invention are defined by the subject-matter of the dependent claims.

In particular, the problem is solved by a method, preferably a computer-implemented method, for controlling the appearance of a LED wall dependent on a viewing angle of a camera relative to the LED wall, the method comprising:
a) determining a LED wall viewing angle of the camera relative to the LED wall; and
b) adjusting the appearance of the LED wall based on the determined LED wall viewing angle.

The problem of the present invention is further solved by a method for creating digitally augmented camera images based on input images containing image data and/or an image representation of a LED wall, the method comprising:
c) controlling the appearance of the LED wall dependent on the viewing angle of a camera relative to the LED wall as described above;
d) capturing at least one input image containing image data of the LED wall with the camera;
e) determining at least one augmenting area in the input image which is to be digitally augmented;
f) providing virtual content image data at least for the at least one augmenting area; and
g) generating a digitally augmented output image by augmenting the input image with virtual content image data at least in the at least one augmenting area.

The invention is based on the surprising finding that the quality of digitally augmented camera images depicting one or more LED walls can be markedly improved when the effect of the viewing angle of the camera relative to the LED wall(s) is taken into account. The inventive method enables a precise correction of brightness and color artifacts which occur when capturing images of LED walls under different angles, and which may lead to the occurrence of noticeable artifacts when camera input images are digitally augmented. The inventive methods thus yield a marked improvement in the quality of digitally augmented camera images containing image data and/or an image representation of LED walls.

It is to be noted at this point that the object of the invention is solved by both methods described above. Both methods reduce visual artifacts associated with the use of LED walls and thus solve the object of the invention.

With the method for controlling the appearance of a LED wall dependent on a viewing angle of a camera relative to the LED wall, the appearance of the LED wall can be controlled such that the visual appearance of the LED wall in the input images captured by the camera does not change when the viewing angle of the camera is changed. This greatly enhances the realism of the scene background provided with the LED wall.

If the input images containing depictions of the LED wall are to be digitally augmented, the picture quality can be enhanced with the above-described method for creating digitally augmented camera images. One problem which arises with the use of LED walls is that it is difficult to ensure a seamless transition between the input image areas in which the LED wall is visible and the virtual content image data. Since the visual appearance of the LED wall (i.e., the brightness and/or color and/or color balance of the LED wall) varies with the viewing angle of the camera relative to the LED wall, marked deviations in brightness and/or color and/or color balance between areas of the input image depicting the LED wall and the virtual content image data can occur. When augmenting the input image with virtual content image data, abrupt transitions in brightness and/or color and/or color balance may be visible at boundaries between input image areas depicting the LED wall and the augmenting areas which are overlaid with virtual content image data.

The present invention provides a solution to this problem by adjusting the brightness and/or color and/or color balance of the LED wall in dependence on the LED wall viewing angle of the camera before the input image is captured. This enables a simple yet effective adjustment of the LED wall appearance, i.e., its brightness and/or color and/or color balance, to the virtual content image data. This ensures a seamless transition between the input image areas in which the LED wall is captured and the virtual content image data. By adjusting the LED wall appearance dependent on the LED wall viewing angle of the camera, transition errors between areas of interest in the input image (i.e., image areas that are not replaced or augmented with virtual content image data) and the digitally augmented image areas with virtual content image data can be considerably reduced.

The invention is based on a detailed understanding of the nature of the artifacts occurring with LED walls dependent on the viewing angle. Brightness and/or color artifacts when capturing images of LED walls are caused by the physical configuration of the LED walls. Usually, each pixel of a LED wall is composed of individual color LEDs, for example, a red, green and blue LED. These color LEDs have a direction dependent emission pattern. The intensity of the light emitted by the individual color LEDs of the LED walls is usually highest in a direction orthogonal to the surface of the LED wall, and declines with increasing angle between the surface normal of the LED wall and an observer's viewing direction.

The strength of brightness and/or color artifacts may be further dependent on the relative arrangement of the individual color LEDs within one LED wall pixel. For some walls, the color LEDs of an individual LED wall pixel are arranged in a vertical column. If the viewing angle before such a LED wall is varied within a horizontal plane (i.e. if a camera is panned before the LED wall, such that only its horizontal orientation relative to the LED wall changes), the brightness of the individual LED wall pixels will predominantly change, because of the direction dependent emission pattern of the color LEDs. If the viewing angle is varied within a vertical plane (i.e. if a camera it tilted before the LED wall, such that only its vertical orientation relative to the LED wall changes), a change in color of the individual LED wall pixels may also be perceived, because color LEDs of individual LED wall pixels may partly obscure each other, leading to a variation tin the color composition of the individual pixel.

The occurrence of these artefacts is taken into account by adjusting the brightness and/or color and/or color balance of the LED wall, or, more precisely, of the color LEDs constituting the LED wall pixels of the LED wall, based on the LED wall viewing angle of the camera, which is determined for each input image. In some embodiments, the LED wall viewing angle may be determined as one value for the entire LED wall. This may be preferable if the camera has a sufficient distance from the LED wall, so that the viewing angle under which the camera views the different regions of the LED wall is substantially the same for all LED wall pixels.

In cases in which the camera is relatively close to the LED wall so that the LED wall extends over a significant portion of the camera's field of view, it is preferred that the LED wall viewing angle is determined for a plurality of LED wall positions, preferably for each LED wall pixel individually. With this approach, the quality of the images can be notably improved, since the LED wall viewing angle of the camera may vary significantly throughout the input image frame.

In the context of the present invention, the camera is preferably configured as a digital camera, that is equipped with an image sensor to capture images in digital memory. This allows for an image augmentation in real time. However, the present invention is also feasible with an analog camera, for which the captured images are digitalized. In the context of the present invention, the term "camera" thus designates any camera system that is suitable to provide digital input images that can be augmented with digital image content.

In the context of the present invention, the term "LED wall appearance" or "appearance of the LED wall" designates the visual appearance of the LED wall which is, to a major extent, defined by the brightness and/or color and/or color balance of the LED wall, or, more precisely, the brightness and/or color and/or color balance of the individual LED wall pixels. The brightness and/or color and/or color balance of the individual LED wall pixels is determined by the brightness of the single color LEDs of each individual LED wall pixel. Consequently, adjusting the LED wall appearance (based on the LED wall viewing angle of the camera) may correspond to adjusting the brightness and/or color and/or color balance of LED wall based on the determined LED wall viewing angle and/or, to adjusting the brightness of color LEDs of the LED wall pixels of the LED wall based on the determined LED wall viewing angle. Specific preferred embodiments of this adjustment will be described in greater detail below. For the sake of brevity, the "LED wall viewing angle of the camera" is sometimes also referred to as "LED wall viewing angle" or, simply, as "viewing angle".

An LED wall with which the present invention may be used comprises a plurality of LED wall pixels in a planar arrangement (e.g., arranged in a rectangular or hexagonal grid pattern). Preferably, the LED wall pixels comprise a plurality of (single) color LEDs, e.g., each LED wall pixel comprises a red color LED, a blue color LED and a green color LED. By controlling the brightness of the individual color LEDs within a LED wall pixel, the LED wall pixel can be tuned to an arbitrary color and brightness. The control of the individual LED wall pixels and the color LEDs within the individual LED wall pixels may be performed by a LED wall controller, that is communicatively connected to the LED wall and sends suitable control signals to the LED wall to control the appearance of the individual LED wall pixels.

In the context of the present invention, the appearance of the LED wall may be adjusted by adjusting color information of image data that is to be sent to the LED wall for display thereon. The term "color information" is to be understood as comprising one or more parameter which enables the modification of the LED wall appearance. Color information may comprise one or more of the following parameters: brightness; color, which may be parameterized, for example, by the brightness values of individual color channels (such as red, green and blue) of the individual LED wall pixels; color balance; and/or hue.

According to one embodiment, the adjustment of the LED wall appearance may be carried out by determining suitable adjustment control signals (based on the determined LED wall viewing angle) that are sent to a LED wall controller. In this case, the LED wall controller receives image data to be displayed on the LED wall, and creates corresponding control signals for the individual LED wall pixels corresponding to the image data, so that the LED wall displays an image corresponding to the image data received by the LED wall controller. The control signals may be adjusted based on the adjustment control signals, which are determined based on the LED wall viewing angle of the camera. The adjustment may comprise an adjustment of the color information of the image data based on the determined LED wall viewing angle. The adjusted image data is then sent to the LED wall for display.

In order to reduce the amount of data to be exchanged with the LED wall controller, according to another preferred embodiment, the adjustment of the LED wall appearance is carried out by modifying the image data to be displayed on the LED wall based on the determined LED wall viewing angle. The modified image data, which is image data that has been adjusted based on the determined LED wall viewing angle, is sent to the LED wall controller. The modified image data is displayed on the LED wall. With this embodiment, the adjustment of the LED wall appearance based on the LED wall viewing angle of the camera can be carried out without involvement of the LED wall controller. This allows the use of a conventional LED wall controller that is configured to receive (modified) image data, and to control the individual LED wall pixels such that the (modified) image data is displayed on the LED wall.

The input image captured by the (digital) camera is provided as digital image, that is usually composed of pixels, each with finite, discrete quantities of numeric representation for its intensity or gray level per pixel. These quantities are usually output as spatial coordinates denoted with x, y on the x-axis and y-axis, respectively. The 2D area that is spanned by the spatial coordinates representing the input images is also referred to as image frame in the context of this disclosure.

In the context of the present invention, the term "input images" refers to images captured by a camera. Input images may be used as input for the digital augmentation. Input images containing image data and/or an image representation of a LED wall designate camera images in which a LED wall within the camera's field of view is visible.

In the input images (which are captured by the camera, possibly after the LED wall appearance has been adjusted based on the camera's viewing angle relative to the LED wall), at least one augmenting area is determined. The at least one augmenting area is an area of the input image containing image data that is to be essentially replaced with virtual content image data. In the context of the present invention, these areas are referred to as (at least one) augmenting area in the singular, indicating at least one continuously connected area in the input image, or as augmenting areas (plural), indicating any plurality of areas in the input image that are to be augmented, irrespective of whether these areas are continuously connected or not. The use of the plural for the augmenting areas does not imply that the input image has to contain a plurality of disjointed or separated augmenting areas - the augmenting areas may also be continuously connected to form (at least one) contiguous augmenting areas.

Besides the augmenting areas, the input images also contain areas that are not to be replaced or augmented with virtual content image data. These areas of the input images are referred to as regions of interest. One can say that, in the context of the present invention, the augmenting areas and the regions of interest are the two basic types of image content that are to be distinguished in the input image. The input image may contain areas that depict an object or scene of interest, such as a LED wall, optionally with persons and/or objects in front of it (in which case both the persons and objects, as well as the image depiction of the LED wall may belong to the areas of interest). These areas in the input image form the regions of interest in the input image. Besides these regions of interest, the input images further contain augmenting areas. These areas are to be replaced by image information not contained in the input image. In the case of a LED wall scene, the augmenting areas usually comprise the areas outside the LED wall in which neither a LED wall nor persons or objects of interest are visible in the input image.

The input images are modified by augmenting the input image with virtual content image data at least in the augmenting areas. The virtual content image data is not particularly limited. In the case of input images depicting LED walls, the virtual content image data may be image data that complements the image data displayed on the LED wall, so that the imagery displayed on the LED wall is virtually extended beyond the borders of the LED wall.

The combination of the virtual content image data (at least in the augmenting areas) with the image data contained in regions of interest yields the digitally augmented output image. Different methods for combining the virtual content image data with other image information in the input image can be used and are known in the art. For example, after determination of the augmenting areas, the corresponding pixels of the input image can be set transparent. The modified input image thus obtained can then be overlaid with an image containing the virtual content image data. In order to smoothen the transition between the virtual content image data in the augmenting areas and the input image information in the regions of interest, the virtual content image data may be provided to partially overlap with the regions of interest, and the overlapping areas may be overlaid with a transparency gradient.

The methods according to the invention are preferably computer-implemented. The methods can be carried out on a dedicated computer to which (an) input image(s) captured by the camera are provided. Alternatively, the methods may be implemented on a microcomputer or microcontroller that is contained in the camera or in a separate device.

It should be noted that the methods are not strictly limited to the above-identified order of the steps. The steps may partially be performed simultaneously. Obvious limitations in the order of the steps are that steps a) and b) are to be performed before step c), and step d) needs to be performed after step c).

The providing of virtual content image data can be achieved by receiving pre-compiled virtual content image data from a data source, and/or by creating or rendering virtual content image data in real time. One preferable application scenario of the present invention is to augment the image content shown on the LED wall beyond the borders of the LED wall visible in the input images. In this case, the image data used for display on the LED wall and the virtual content image data may be provided from the same data source.

The LED wall viewing angle of the camera (also referred to as viewing angle of the camera in the following) designates an angle between the camera's optical axis and a reference direction or vector of the LED wall. As reference vector if the LED wall, for example, the surface normal vector of the LED wall may be used (which is uniquely determinable in the case of flat LED walls, and may be defined as the surface normal vector of a tangent plane of the LED wall in the case of curved LED walls).

For the determination of the LED wall viewing angle, different methods may be used. According to a preferred method, the determination of the LED wall viewing angle comprises
- providing a 3D model of the LED wall;
- establishing a position and pose of the camera, which preferably comprises establishing a position of the camera and an orientation of the optical axis;
- determining the LED wall viewing angle based on the 3D model and the established position and pose of the camera, and/or the established position of the camera and orientation of the optical axis.

This method enables a reliable and accurate determination of the LED wall viewing angle.

The 3D model of the LED wall preferably contains (Cartesian) 3D coordinates of at least some delimiting features of the LED wall. If the LED wall is constituted by a rectangular screen, for example, the 3D model may contain at least the (Cartesian) coordinates of the corners of the LED wall.

It is preferred that the position and pose of the camera are determined or predicted when before or when determining the LED wall viewing angle, and before or when capturing an input image containing the LED wall. This allows a determination of the viewpoint of the camera relative to the 3D model of the LED wall. In order to determine the position and pose of the camera, a camera tracking system may be employed. Suitable camera tracking systems include systems based on odometry, GPS or optical tracking methods such as SLAM. An optical tracking system suitable for determining the position and pose of a camera is described, for example, in EP 1 211 520 A2.

The position of the camera designates an absolute 3D position of the camera in space. The pose of the camera designates a combination of the camera's position and an orientation of the camera, which is preferably described by a vector parallel to the optical axis of the camera and pointing in the direction of the camera's field of view. This vector is referred to as optical axis in the context of the present invention. The optical axis may be represented by a vector running parallel to the optical axis and pointing in the direction of the camera's field of view, as described above, or may be described by a 3D line without directionality.

According to a further preferred embodiment, adjusting the appearance of the LED wall comprises adjusting color information of the LED wall, preferably the brightness and/or color and/or color balance of the LED wall, preferably by adjusting the brightness of individual color channels of the LED wall based on the determined LED wall viewing angle. The color channels preferably correspond to the colors of the individual color LEDs constituting the LED pixels. For example, the adjustment of the LED wall appearance may be accomplished by adjusting the brightness of a red, blue and green color channel individually, based on the determined LED wall viewing angle. This embodiment may yield an improved adjustment of the LED wall appearance, because the viewing angle dependency of the brightness of different color channels may vary for the different colors.

In this context, it is preferable that adjusting the appearance of the LED wall comprises adjusting the brightness of color LEDs of LED wall pixels of the LED wall in dependence of a LED wall viewing angle, wherein, preferably, the LED wall viewing angle is determined for a plurality of LED pixels, preferably for each LED wall pixel, individually. This approach may yield a significant improvement of the quality of the LED wall appearance correction, particularly in cases in which the camera is placed such that the LED wall spans a significant portion of the camera's field of view. In such cases, the LED wall viewing angle will strongly vary for individual LED wall pixels.

In these cases, it is preferable to determine the LED wall viewing angle for a plurality of LED wall pixels, preferably for each LED wall pixel individually. In this case, the adjustment of the appearance of the LED wall based on the determined LED wall viewing angle is carried out for a plurality of LED wall pixels, preferably for each LED wall pixel, individually.

As mentioned previously, the adjustment of the appearance of the LED wall may be performed by creating suitable adjustment control signals that are sent to the LED wall controller, together with image data for display on the LED wall. In this case, the LED wall controller creates modified control signals for the individual LED wall pixels that are based on the image data, which are adjusted based on the adjustment control signals. According to another preferred embodiment, the adjustment of the appearance of the LED wall is performed by modifying or adjusting the image data based on the determined LED wall viewing angle of the camera. The adjusted image data is then sent to the LED wall controller (as display data) for display on the LED wall. Again, the LED wall viewing angle can be determined individually for a plurality of LED wall pixels (or for each LED wall pixel), and the modification or adjustment of the image data is carried out taking into account the different LED wall viewing angles determined for different LED wall pixels.

According to a preferred embodiment, the determining of the LED wall viewing angle comprises the determining of a plurality of LED wall viewing angles for different reference orientations. It is furthermore preferred that the step of adjusting the appearance of the LED wall based on the determined LED wall viewing angle is carried out for some or each of the plurality of LED wall viewing angles for different reference orientations individually.

As an example, if the color LEDs of individual LED wall pixels are arranged in a vertical column as discussed above, it is preferable that the determining of the LED wall viewing angle comprises the determination of a horizontal LED wall viewing angle (i.e. a LED wall viewing angle measured in a horizontal plane) and the determination of a vertical LED wall viewing angle (i.e. a LED wall viewing angle measured in a vertical plane).

In the adjustment of the LED wall appearance, the horizontal LED wall viewing angle may be used to correct only the brightness, and the vertical LED wall viewing angle may be used to correct only color balance. If the color LEDs of individual LED wall pixels are arranged in a triangle, the determination of the LED wall viewing angle may account for three reference directions, for which the correction may be carried out individually.

When determining a plurality of LED wall viewing angles for different reference orientations, the adjustment of the LED wall appearance based on the plurality of viewing angles for different reference orientations may again be carried out by determining individual viewing angles for different reference orientations for different LED wall pixels. Preferably, the LED wall viewing angles for different reference orientations are determined for each LED wall pixel individually.

In a preferred embodiment, the method comprises creating a viewing angle dependent calibration function for adjusting the LED wall appearance. The viewing angle dependent calibration function is then used for adjustment of the LED wall appearance by adjustment of color information based on the viewing angle dependent calibration function. Preferably, the viewing angle dependent calibration function is created for at least one color channel, preferably for all color channels, of the LED wall separately.

Preferably, the creation of the viewing angle dependent calibration function comprises sending reference image data to the LED wall for display. The reference image data may, for example, be a specific color (such as a color corresponding to one of the LED wall color channels, e.g., red, blue, or green) which is used for uniform display on the entire LED wall. Alternatively, the reference image data is configured such that only a confined area of the LED wall, such as a confined area in the center of the LED wall, displays the reference image data, whilst the rest of the LED wall is kept dark. As explained previously, when the camera is placed at a small distance to the LED wall so that the LED wall extends over a significant portion of the camera's field of view, the LED wall viewing angle of the camera may vary significantly throughout the input image frame. In such cases, it is preferred that the reference image data is configured such that only a confined area of the LED wall (that is seen by the camera under a substantially constant LED wall viewing angle) displays the reference image data whilst the rest of the LED wall is kept dark, since a display of the reference image data in other areas of the LED wall that appear under a different viewing angle would only contribute noise to the process of creating the viewing angle dependent calibration function. Preferably, a confined center area of the LED wall is used for the process of creating the viewing angle dependent calibration function. The reference image data (such as a uniform color with uniform brightness) is then displayed only in this confined center area of the LED wall, and the rest of the LED wall is kept dark.

The creation of the viewing angle dependent calibration function is based on a comparison of the color information of the reference image data and color information contained in at least one (calibration) input image, i.e. an image captured by the camera that contains the LED wall. Preferably, after creation of the viewing angle dependent calibration function for one color channel, the method steps are repeated for another color channel until a viewing angle dependent calibration function is created for each color channel of the LED wall. In the following, the term "(viewing angle dependent) calibration function" may designate the (viewing angle dependent) calibration function for one color channel, or a (viewing angle dependent) calibration function for a plurality of color channels, which may be expressed, for example, as an angle dependent vector.

According to one embodiment, the reference image data is kept constant during the process of creating the viewing angle dependent calibration function, so that the LED wall displays the same color information during the entire process. Preferably, the creation of the viewing angle dependent calibration function comprises capturing a reference input image of the LED wall at a predetermined reference viewing angle, e.g. a viewing angle of 0° or a viewing angle corresponding to an orthogonal orientation of the camera's optical axis and the LED wall. The creation of the viewing angle dependent calibration function preferably further comprises capturing a plurality of calibration input images of the LED wall at different viewing angles.

Preferably, the method further comprises determining calibration function values for different viewing angles based on comparing the color information of parts of the calibration input images depicting the LED wall under different viewing angles with the color information of parts of the reference input image depicting the LED wall. Preferably, the creation of the viewing angle dependent calibration function further comprises a step of interpolating calibration values based on the viewing angle dependent calibration values that have been determined by the comparison step described above.

According to another preferred embodiment, the reference image data (and, thus, the appearance of the LED wall) is not kept constant during the creation of the viewing angle dependent calibration function. This embodiment also comprises the steps of sending reference image data to the LED wall for display, capturing a reference input image under a predetermined reference LED wall viewing angle, and capturing calibration input images of the LED wall at different viewing angles. In contrast to the method described above, at a given LED wall viewing angle, the comparison of the color information of the captured calibration input and the color information of the reference input image is used to amend the appearance of the LED wall. If the color information does not match (i.e., if the difference in color information does not fall below a predetermined threshold), adjustment control signals for matching the appearance of the LED wall (as contained in the captured calibration input image) to the reference input image are determined. The appearance of the LED wall is amended based on the determined adjustment control signals.

Preferably, a further calibration input image of the LED wall (with the amended appearance based on the determined adjustment control signals) is captured, and its color information is compared to that of the reference input image. If no match is determined (i.e., if the difference in color information does not fall below a predetermined threshold), the adjustment control signals are amended such that the appearance of the LED wall (as contained in the captured calibration input image) is more closely matched to the reference input image. This loop can be repeated until suitable adjustment control signals to match the appearance of the LED wall to the reference input image are determined in an iterative manner.

Once a match between the reference input image and the captured calibration input image is found, calibration function values are determined for the given LED wall viewing angle based on the correspondingly determined adjustment control signals. With this iterative method, the appearance of the LED wall is changed based on the adjustment control signals such that, under the given LED wall viewing angle, the LED wall appearance as captured by the camera matches the reference input image. This approach allows a precise and direct determination of adjustment control signals on which the calibration function values are based that allow a viewing angle dependent modification of the LED wall appearance such that input images captured by the camera under a given viewing angle match the input image that is obtained under the reference LED wall viewing angle. Visual artifacts in camera images depicting the LED wall can thus be effectively reduced, because the LED wall appearance can be continuously adjusted such that the camera "sees" the LED wall as it appears under the reference LED wall viewing angle.

Preferably, for both embodiments described above, the comparison of color information of the calibration input images with color information of the reference input image comprises a comparison of a confined, central part of the LED wall in the input images. As noted previously, if the camera is placed comparatively close to the LED wall, the LED wall viewing angle will vary over the area of the input images, or, in other words, the LED wall viewing angle will strongly vary for individual LED wall pixels. In order to enable a reliable determination of the viewing angle dependent calibration function, it is therefore preferable that the determination of the calibration function values only takes into consideration a confined area of the reference and calibration input images depicting the LED wall, which corresponds to an approximately constant LED wall viewing angle in the respective images. Preferably, the reference and calibration input images are captured such that the relative position of the LED wall in the input image frames is approximately constant and preferably centered. For the comparison of reference and calibration input images, a part of the input images depicting the center of the LED wall is preferably used, also in order to reduce the impact of vignetting effects of the camera's lens on the process of creating the viewing angle dependent calibration function. Furthermore, as described above, it is preferable in this context that the reference image data is configured such that only a part of the LED wall, preferably a confined area at the center of the LED wall, displays the reference image data, whilst the rest of the LED wall is kept dark. The comparison of color information in the calibration input images and the reference input image is then carried out for the areas of the input images displaying the confined area of the LED wall that displays the reference image data.

The viewing angle dependent calibration function may furthermore be used to carry out the step of adjusting the LED wall appearance (i.e. adjusting the color information such as brightness and/or color and/or color balance of the LED wall) based on the determined LED wall viewing angle. The viewing angle dependent calibration function may be a scalar function indicating the viewing angle dependent brightness of the LED wall. For example, the values of the calibration function may indicate a ratio of the brightness of the LED wall under a given LED wall viewing angle to the brightness of the LED wall under the reference viewing angle. Further preferably, the values of the calibration function indicate multiplication ratios or gain factors that, when applied to the image data at the corresponding LED wall viewing angle, yield an appearance of the LED wall under the corresponding LED wall viewing angle that corresponds to the appearance of the LED wall at the reference viewing angle. The viewing angle dependent calibration function may also be a vector function, indicating the viewing angle dependent brightness of each of the different colors of the color LEDs separately. As an example, the viewing angle dependent calibration function may be a three-component vector containing a scalar, viewing angle dependent calibration function for the red, green and blue channel, respectively. The angle dependent intensity of each of the different colors of the color LEDs (for example, red green and blue) may be expressed as a ratio of the intensity of each color under a given LED wall viewing angle and the intensity of the corresponding color under the reference viewing angle.

The inventive creation of the viewing angle dependent calibration function automatically takes into account the fact that the representation of the LED wall in the input images may be influenced by the camera. The appearance of the LED wall in the input images is not only dependent on LED wall viewing angle, but also dependent on properties of the camera. For example, the sensitivity of the camera's image sensor may not be perfectly linear for each color channel. Furthermore, the camera may have a specific camera LUT selected, i.e., a conduit/code to transform color (RGB) input values from the camera sensor to different color (RGB) output values to adjust the look or feel of the input images. The color information of the LED wall representation in the input images is not only influenced by the LED wall viewing angle, but also by the camera LUT. By comparing the reference input image (which may be kept constant or may be varied based on the comparison) with the calibration input images to determine the viewing angle dependent calibration function, camera-dependent modifications of the appearance of the LED wall in the input images is automatically taken into consideration by the calibration process, since the camera-dependent modification of the LED wall appearance in the input images is effectively cancelled out.

If a 3D model of the LED wall is provided, it can not only be used to determine the LED wall viewing angle of the camera, but can also be used for the determination of the augmenting areas. Preferably, the determining of the augmenting areas comprises
- providing a 3D model of the LED wall that is captured in the input image;
- establishing a position and pose of the camera;
- calculating the image position of the LED wall in the input image based on the 3D model of the LED wall and the established position and pose of the camera;
- determining the augmenting areas based on the image position of the LED wall in the input image.

Areas of the input image that do not depict the LED wall (and, thus, represent augmenting areas) can be determined with high reliability, accuracy and speed if a 3D model of the LED wall is provided. The camera position and pose (during the capture of an input image) is established, and the position of the LED wall in the input image can be calculated based on the 3D model of the LED wall and the position and pose of the camera.

As detailed previously, the 3D model of the LED wall preferably contains 3D (Cartesian) coordinates of at least some delimiting features of LED wall, such as the (Cartesian) coordinates of the corners of the LED wall. The position and pose of the camera can be determined with any suitable tracking means as described above.

According to a further preferred embodiment, the providing of the virtual content image data is based on or takes into consideration a vignetting model of the camera. Preferably, the providing of the virtual content image data comprises the step of providing a vignetting model for the camera; wherein the providing of the virtual content image data and/or generating the digitally augmented output image is based on the vignetting model of the camera.

Vignetting refers to the reduction (or increase) of an image's brightness or saturation towards the periphery, which occurs in all lenses and lens systems used in cameras. The vignetting effect may vary with the type of lens used, and may furthermore be dependent on various camera settings such as aperture. The image effect caused by vignetting, i.e. the vignetting effect, is characterized by a brightness reduction (or increase) in areas of the image that are at a distance from the center, yielding a darker (or brighter) border at the periphery of the image.

Taking into account the vignetting effect of the camera further enhances the obtainable quality and realism of the digitally augmented output images. In the application scenario of the present invention, the input images contain an image representation of the LED wall which usually does not fill the entire image. as described above, the determination of the augmenting areas in such cases is comparatively straightforward - any area of the input image that neither depicts the LED wall nor a foreground object such as a person may be determined as augmenting area. The imagery displayed on the LED wall may then be augmented by overlaying corresponding virtual content image data in the augmenting areas. Thus, the imagery shown on the LED wall and captured in the input image is virtually extended or augmented with virtual content image data.

However, since the image content on the LED wall, which is captured in the input images, is subjected to imaging aberrations and errors of the camera, the quality of digitally augmented camera images can be greatly improved if the virtual content image data is modified based on a vignetting model of the camera (and, thus, virtually subjected to the same imaging error as the data in the input image). In this scenario, it is preferred that the vignetting model is used to apply a vignetting effect to the virtual content image data, such that the virtual content image data is subjected to the same vignetting effect as the remaining content of the input image that has been captured by the camera and is not replaced by virtual content image data.

In order to enable a consideration of the vignetting effect in the creation of digitally augmented images, a vignetting model may be provided. The vignetting model is a function that, for a given 2D point coordinate in an image, outputs the reduction in brightness or saturation for this specific image 2D point coordinate relative to the center of the image. The vignetting model may be constituted by a radial function indicating the reduction in brightness or saturation in dependence of the (radial) distance from the image center. Alternatively, the vignetting model may be provided as a lookup table in which the reduction in brightness or saturation is provided for each pixel of the image frame. The reduction in brightness or saturation may, for example, be indicated by a number between 0 and 1, with 0 indicating a full brightness or saturation reduction to zero, and 1 indicating no brightness or saturation reduction (which may be the case for the center of the image frame, for example). Due to the camera LUT selected, the vignetting model may appear to change also the color, and not only the brightness of the image, however, the brightness reduction is usually prevalent.

It is preferable that the vignetting model is dependent on the aperture size of the camera. The smaller the aperture of the camera, the less pronounced the vignetting effect will be. It is therefore preferable that the vignetting model comprises a set of a plurality of sub-models for different aperture sizes of the camera.

Providing virtual content image data based on the vignetting model may comprise applying a vignetting effect to the virtual content image data that is based on or derived from the vignetting model. This may further improve the quality of the digitally augmented output images because imaging abberations and errors of the camera are taken into consideration in the provision of the virtual content image data.

In a further embodiment, the vignetting model is used in the step of creating virtual content image data by
- applying a devignetting effect based on the vignetting model to the input image, preferably at least to areas of the input image that are outside the augmenting areas, and
- combine the virtual content image data with the devignetted input image, preferably with areas of the input image that are outside the augmenting areas and to which the devignetting effect has been applied.

This embodiment also allows for an improvement in image quality of digitally augmented camera images, because abrupt transitions between input image data (which has been subjected to vignetting due to the fact that the image data is captured with a camera) and virtual content image data are mitigated or eliminated by devignetting the image data in the input image.

According to a further embodiment, the vignetting model is used to adjust the appearance of the LED wall. In this embodiment, the vignetting effect of the camera is compensated by adjusting the LED wall appearance based on the vignetting model such that the vignetting effect of the camera is cancelled out in the input images. Since the vignetting model is indicative of the brightness or saturation variation caused by the vignetting effect of the camera, the LED wall appearance may be adjusted based on the vignetting model by modifying the color information of the image data to be displayed on the LED wall such that the vignetting effect in the input images of the camera is annulated.

As mentioned above, the values of the vignetting model, that are indicative of a reduction in brightness and/or saturation due to the vignetting effect of the camera, may be provided as numeric values on a predetermined scale. For example, a numeric value of zero in the vignetting model may indicate that the corresponding pixel is completely obscured by the vignetting effect and always yields a zero brightness, i.e. is completely black. The numeric values may furthermore be normalized. For example, a value of 1 in the vignetting model may indicate that the corresponding pixel is not reduced in brightness and/or saturation by the vignetting effect at all, or is a pixel experiencing the least reduction in brightness relative to the other pixels of the input image frame.

When using values between 0 and 1 for the vignetting model, the applicability of the vignetting model is facilitated. The vignetting model can, for example, be used to apply a vignetting effect to image data, in particular virtual content image data, by multiplying the brightness and/or saturation value of a pixel in question with the corresponding value of the vignetting model. A more complex vignetting model could also take in consideration camera LUT when applying a vignetting effect to image data to apply not only brightness reduction but also the potential color shift caused by the camera LUT.

Conversely, image data, in particular input image data, can be devignetted by dividing the brightness and/or saturation value of a pixel in question by the corresponding value of the vignetting model. Again, a more complex vignetting model could also take in consideration camera LUT when applying a vignetting effect to image data to apply not only brightness reduction but also the potential color shift caused by the camera LUT.

According to a preferred embodiment, the vignetting model comprises a function mapping a vignetting value indicative of a reduction in brightness and/or saturation due to the vignetting effect of the camera to each pixel position of an image frame of the camera. The mapping can be provided in a lookup table, in which a value indicative of the reduction in brightness and/or saturation is given for each pixel of the image frame of the camera. This allows for a conceptually simple and computationally easily accessible provision of the vignetting model.

According to a further embodiment, the vignetting model comprises a function mapping a vignetting value indicative of a reduction in brightness and/or saturation due to the vignetting effect of the camera to a distance relative to a center of an image frame of the camera. This vignetting model requires less storage space than a pixel based vignetting model, but still allows for a good reproducibility of the vignetting effect of the camera. As with the previous embodiment, the vignetting values may be provided as numeric values on a predetermined scale, which may furthermore be normalized. Preferably, values between 0 and 1 are used for the vignetting values.

When using this type of vignetting model for the modification of image data, a distance between a pixel coordinate to be modified and the image center is calculated, in order to obtain the corresponding vignetting value. It may be preferable to use the geometric center of the image frame as image center. If the image frame has a resolution of W x H pixels in x and y direction, respectively, the image center may be determined as (W/2; H/2). Alternatively, the image center may be offset with regard to the geometric center of the image frame, to account for an asymmetric or off-axis alignment of the lens system of the camera. In this case, it is preferable that the center of the image frame of the camera comprises an offset value indicating an offset between the geometrical center of the image frame of the camera and a center of the vignetting model at which the vignetting value has a minimum or maximum value.

The offset value is preferably constituted by a 2D vector indicating the offset in x and y direction in the image frame.

In a further preferred embodiment, the virtual content image data is subjected to a lens distortion effect that corresponds to the lens distortion effected by the camera before generating the digitally augmented output image. This further enhances the quality of the digitally augmented output image.

The object of the present invention is furthermore solved by a control system for controlling the appearance of a LED wall dependent on a viewing angle of a camera relative to the LED wall, preferably by using a method for controlling the appearance of a LED wall dependent on a viewing angle of a camera relative to the LED wall as described above, the system comprising:
- a processing unit that is configured to
   ∘ receive image data for display on the LED wall;
   ∘ determine a LED wall viewing angle of the camera relative to the LED wall;
   ∘ create display signals for use by a LED wall controller to adjust the appearance of the LED wall based on the image data and the determined LED wall viewing angle;
- a communication unit that is configured to communicatively couple the digital image processing system to the LED wall controller for controlling the LED wall, and to transmit the display signals for adjusting the appearance of the LED wall to the LED wall controller.

The object of the present invention is furthermore solved by a digital image processing system for creating digitally augmented camera images based on input images containing image data of a LED wall, preferably by using a method for creating digitally augmented camera images based on input images containing image data and/or an image representation of a LED wall as described above.

The digital image processing system comprises the control system described above, wherein the processing unit is further configured to
∘ receive an input image from a camera;
∘ determine augmenting areas in the input image which are to be digitally augmented;
∘ provide virtual content image data at least for the augmenting areas; and
∘ generate a digitally augmented output image by augmenting the input image with virtual content image data at least in the augmenting areas.

The technical advantages achievable with the control system and the digital image processing system of the present invention correspond to those achieved with the corresponding methods for controlling the appearance of a LED wall and for creating digitally augmented camera images described above. Aspects, features and advantages described in the context of the inventive methods are also applicable to the inventive systems, and vice versa.

In particular, any task that the processing unit or communication unit of the inventive systems are configured to perform can be carried out as a method step in the inventive methods, and vice versa. Preferably, the inventive methods are performed using a corresponding inventive system as described above.

The processing unit and the communication unit can be implemented as physically separate entities, and/or can be implemented as software modules that are contained and executed in a common computing unit.

In order to determine the LED wall viewing angle of the camera, and/or to receive input images from the camera, the control system and/or the digital image processing system may be communicatively coupled to the camera, by a wired or wireless connection, or may be implemented as digital or software components that are integrated into the camera.

Since the digital processing system according to the present invention comprises the control system for controlling the appearance of a LED wall according to the invention, features of the control system are applicable to the digital processing system as well. In the following, preferred improvements of the systems are described which are applicable to the control system as well as to the digital processing system.

According to a preferred embodiment, the (control and/or digital processing) system comprises a storage unit for storing data. Preferably, the storage unit is configured to store a 3D model of the LED wall. The 3D model may be provided from the storage unit to the processing unit for determining the LED wall viewing angle and/or to determine the augmenting areas in the input images, as described above with reference to the inventive methods. The storage unit may be further configured to store a viewing angle dependent calibration function as described with reference to the inventive methods, which may be provided to the processing unit for adjusting the LED wall appearance by performing the according method steps described above. According to a preferred embodiment, the control system is configured to create the viewing angle dependent calibration function in accordance with the method steps described above.

The adjustment of the LED wall appearance as described with reference to the inventive methods is implemented in the inventive systems by the creation of corresponding display signals. The display signals may comprise image data for display on the LED wall, and/or adjustment (control) signals for adjusting the appearance of the LED wall. As explained above in the context of the inventive method, it may be preferable that the control system is configured to receive image data for display on the LED wall, to create adjustment control signals based on the determined LED wall viewing angle, and to send the adjustment control signals togethwer with the image data to the LED wall controller. In this case, the LED wall controller creates modified control signals for the individual LED wall pixels that are based on the image data, which are adjusted based on the adjustment control signals. According to another preferred embodiment, the control system is configured to adjust the appearance of the LED wall by modifying or adjusting the image data based on the determined LED wall viewing angle of the camera. The adjusted image data is then sent to the LED wall controller as display data for display on the LED wall.According to a further preferred embodiment, the storage unit is configured to store a vignetting model of the camera, and to provide the vignetting model to the processing unit. This enables the use of the vignetting model in the providing of the virtual content image data and/or the generating of the digitally augmented output image as described above in the context of the inventive methods. Method steps using the vignetting model may be carried out by a correspondingly configured processing unit.

The object of the invention is further solved by a computer-readable medium containing instructions that, when executed by at least one processor, cause the at least one processor to perform a computer-implemented method comprising steps in accordance with the inventive methods described above. The technical advantages achieved with the method of the present invention correspond to those achieved with the computer-implemented method and corresponding computer-readable medium. Aspects, features and advantages described in the context of the inventive method are also applicable to the inventive computer-implemented method and computer-readable medium.

The above and further features and advantages of the present invention will become more readily apparent from the following detailed description of preferred embodiments of the invention with reference to the accompanying drawings, in which:
- Fig. 1: is a schematic illustration of a camera with a control system or digital image processing system in accordance with an embodiment of the present invention that is used to capture a scene with a LED wall;
- Fig. 2: is a schematic illustration of an input image captured in the setting of Fig. 1 that contains regions of interest and augmenting areas;
- Fig. 3: is a schematic illustration of a camera with a control system or digital image processing system in accordance with an embodiment of the present invention that is used to adjust the appearance of a LED wall in dependence of a LED wall viewing angle of the camera;
- Fig. 4a-b: are schematic illustrations of a LED wall pixel with multiple color LEDs;
- Fig. 5a-c: are schematic illustrations of a viewing angle relative to a LED wall;
- Fig. 6: shows exemplary calibration function profiles in dependence of a vertical LED wall viewing angle for the individual color channels of a LED wall with LED wall pixels configured in accordance with Fig. 4a;
- Fig. 7: shows an exemplary calibration function profile in dependence of a horizontal LED wall viewing angle for the color channels of a LED wall with LED wall pixels configured in accordance with Fig. 4a;
- Fig. 8: is a schematic illustration of the vignetting effect in an input image frame;
- Fig. 9: indicates the radial coordinates used in the vignetting model of a preferred embodiment of the invention;
- Fig. 10: shows a flow diagram representing the creation of a viewing angle dependent calibration function according to a preferred embodiment of the invention; and
- Fig. 11: shows a flow diagram representing the creation of the viewing angle dependent calibration function according to a further preferred embodiment of the invention.

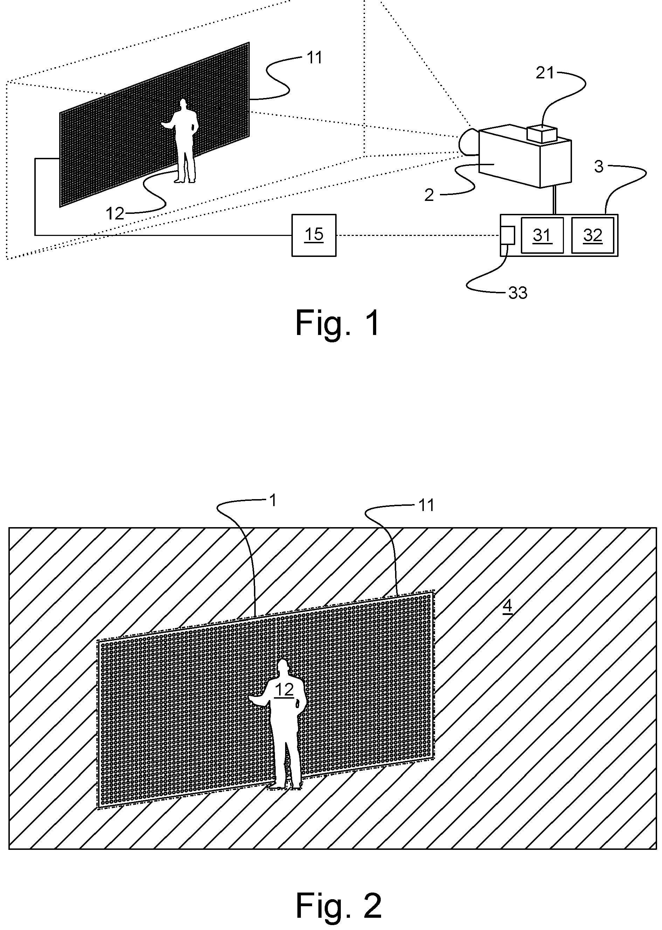

Fig. 1 shows a schematic illustration of a scenario in which the methods and systems according to the present invention may be used. Fig. 1 shows a system 3 that may be configured as a control system and/or as a digital image processing system in accordance with embodiments of the present invention. For the sake of simplicity, the unit 3 will be referred to as system 3 in the following when features are described that are applicable to the control system as well as to the digital image processing system of the invention.

The system 3 comprises a processing unit 31 and a storage unit 32, which will be described in greater detail below. The system 3 is connected to a camera 2. It can be constituted by a separate unit or be comprised in the electronic components of the camera 2. The camera 2 is provided to shoot a scenery containing a LED wall 11. The LED wall 11 constitutes an object of interest, which will be contained in images captured by the camera 2. In front of the LED wall 11, further objects of interest may be located, such as a person 12.

The camera 2 may be a photo camera for shooting still images or, more preferably, a movie camera for capturing movie sequences constituted by a plurality of sequential images. The area that is captured by the camera 2 is indicated in Fig. 1 by dotted lines. The camera 2 is equipped with a tracking system 21 which is configured to establish a position and/or pose of the camera 2.

The system 3 further comprises a communication unit 33. The communication unit 33 may be constituted by a terminal for connecting a communication line such as a network cable, or by a wireless interface. The communication unit 33 is configured to establish a communication link of the system 3 to a LED wall controller 15, as indicated by a dashed line. The LED wall controller 15 is connected to the LED wall 11 and is configured to control the visual appearance of the LED wall 15 by controlling the brightness and color of the individual LED wall pixels.

In order to control the (visual) appearance of the LED wall 11, the system 3 is configured to create display signals that are sent to the LED wall controller 15. The display signals comprise image data that may be provided as pixel-based color information to be displayed by individual LED wall pixels of the LED wall 11.

In order to control the visual appearance of the LED wall 11 based on a viewing angle of the camera 2, as discussed below, the system 3 may be configured to send adjustment control signals together with the image data to the LED wall controller 15, which, in turn, creates control signal for controlling the LED wall 11 appearance based on the image data and the adjustment control signals. In this case, the display data that is sent by the communication unit 33 to the LED wall controller 15 comprises the image data and the adjustment control signals. Alternatively, the system 3 (in particular the processing unit 31) is configured to modify or adjust the image data that is to be displayed on the LED wall 11, e.g. based on the determined LED wall viewing angle of the camera 2. In this case, the display data that is sent by the communication unit 33 to the LED wall controller 15 comprises the adjusted image data. In this case, the LED wall controller 15 may use the adjusted image data to control the appearance of the LED wall 11, without performing additional corrections. This reduces the amount of data that has to be sent to the LED wall controller 15.

The scenario depicted in Fig. 1 may be encountered when shooting a movie scene, in which the person 12 acts before the LED wall 11 which displays a scene background, or in a television production studio, where the person 12 is an anchorman presenting news or weather forecasts in front of the LED wall 11 which displays additional information such as a weather map or a virtual studio background.

Fig. 2 is a schematic illustration of an image captured by the camera 2 in the setting depicted in Fig. 1. The area captured by the camera 2, that is indicated by dotted lines in Fig. 1, is contained in an image frame of the camera 2 and yields an input image which is schematically illustrated in Fig. 2. The input image is preferably provided as a pixel-based, digital image. In the input image, the LED wall 11 and the person 12 in front of it are visible. Both the LED wall 11 and the person 12 constitute objects of interest. In case of a possible digital processing of the input image, these objects of interest are to be maintained, at least in great parts, in the input image. The entirety of the input image area covered by the objects of interest may be referred to as a region of interest 1 and is delimited in Fig. 1 by a dash-dotted line.

Fig. 2 shows a scenario in which a part of the person 12 (its feet) are not comprised in the area of the input image delimited b the LED wall 11. This part may be omitted from the region of interest 1 for the sake of simplicity. Alternatively, the part may be automatically determined, for example by a suitable AI algorithm, and be included in the region of interest 1 as shown in Fig. 2.

The input image of Fig. 2 further contains areas that do not depict any object of interest such as the LED wall 11 or the actor 12, i.e. areas outside the region of interest 1. These areas, which are cross-hatched in Fig. 2, may be designated as augmenting area(s) 4. In the case of digital processing of the input image, the augmenting area(s) 4 is/are to be augmented with virtual image content that is not visible in the input image of Fig. 2. For the sake of clarity, the entirety of augmenting areas 4 in the input image(s) is referred to as augmenting area 4.

In the case of a movie scene, the augmenting area 4 may be augmented with scenic imagery complementing the scenery displayed on the LED wall 11. In the case of a television production studio, it may be desirable to display virtual studio content in the augmenting area 4.

The visual appearance of the LED wall 11 in an input image as the one shown schematically in Fig. 2 may vary with varying viewing angle of the camera 2 relative to the LED wall 11. If the camera 2 is oriented to look essentially straight onto the LED wall 11, the perceived brightness of the LED wall 11 may be higher than in cases where the camera 2 looks at the LED wall under an inclined angle. With varying viewing angle of the camera 2, the brightness of the LED wall 11 may vary, as well as its color and/or color balance. This variation of the LED wall appearance with varying camera viewing angle is disadvantageous, since the LED wall 11 should create the impression of a realistic background, whose appearance would not change with changing viewing angle. The present invention provides a viable approach to tackle this problem.

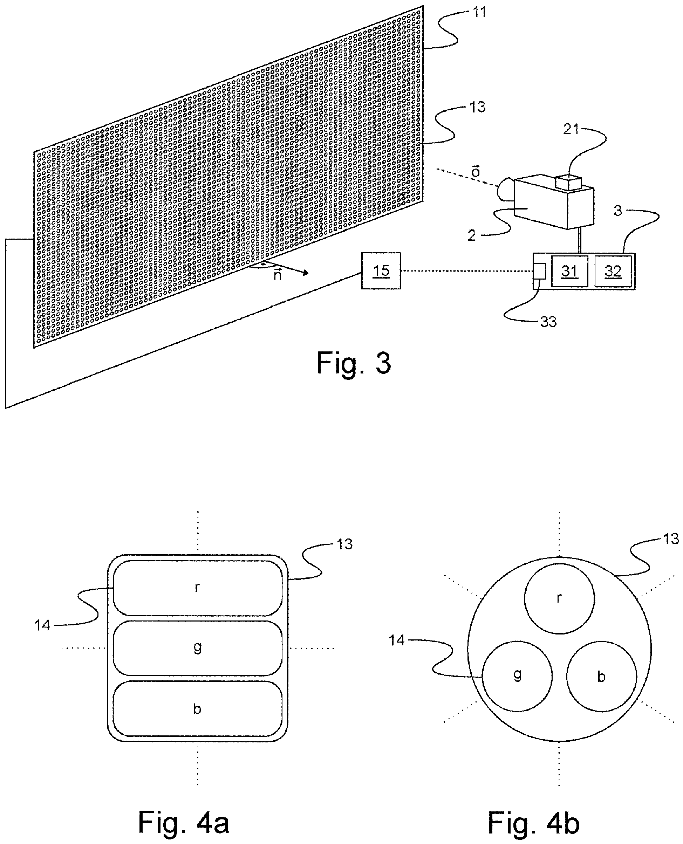

Fig. 3 is a schematic illustration of a camera 2 connected to a system 3 that is used to adjust the appearance of a LED wall 11 in dependence of a LED wall viewing angle of the camera 2.

Like in the embodiment of Fig. 1, the camera 2 is provided with a tracking system 21 for establishing the position and pose of the camera 2. The camera 2 is oriented towards the LED wall 11, in order to capture input images containing the LED wall 11. The pose of the camera 2, i.e. its orientation that defines its viewing direction. The camera's viewing direction lies on the camera's optical axis, which is indicated by a dash-dotted line and designated with the reference sign o̅. The orientation of the LED wall 11 is characterized by a normal vector n̅ that is orthogonal to the surface of the LED wall 11.

The LED wall 11 comprises a plurality of LED wall pixels 13. Typical configurations of individual LED wall pixels 13 are schematically depicted in Fig. 4a and 4b. The LED wall pixel 13 of Fig. 4a comprises three color LEDs 14 that are designated as red (r), green (g) and blue (b). The LED wall pixel 13 of Fig. 4a is essentially rectangular, and/or square-shaped, with the individual color LEDs 14 arranged in a vertical column. The LED wall pixel 13 of Fig. 4b also comprises three color LEDs 14 labelled as red (r), green (g) and blue (b). However, the LED wall pixel 13 of Fig. 4b is essentially circular, with the color LEDs 14 being arranged in a triangle.

The LED wall 11 of Fig. 3 may be composed of LED wall pixels 13 according to the configuration of Fig. 4a or 4b. When viewing the LED wall 11 under different viewing angles, the (relative) intensities of the individual color LEDs 14 of the LED wall pixels 13 may change, leading to a viewing-angle dependent variation in the visual appearance of the LED wall 11. The variation in appearance is effected by a variation of the brightness and/or color and/or color balance of the LED wall 11 with varying viewing angle, that manifests itself in a corresponding variation of brightness and/or color and/or color balance in input images of the camera 2 that depict the LED wall 11 when the viewing angle of the camera 2 with respect to the LED wall 11 is changed.

In order to suppress the above-described variation in visual appearance of the LED wall 11 with varying viewing angle, the present invention proposes an adjustment of the appearance of the LED wall 11 based on a determined LED wall viewing angle. In order to effect this adjustment, the system 3 is configured to create control signals based on the determined LED wall viewing angle of the camera 2, which are transmitted to the LED wall controller 15. Based on the control signals, the LED wall controller 15 adjusts the appearance of the LED wall 11 by adjusting the brightness and/or color and/or color balance of the LED wall 11 based on the viewing angle of the camera 2 relative to the LED wall 11.

In the present embodiment, the viewing angle of the camera 2 relative to the LED wall 11 is defined as the angle between the optical axis o̅ of the camera and the normal vector n̅ of the LED wall 11, and is referred to as LED wall viewing angle or viewing angle α.

In order to enable a determination of the (LED wall) viewing angle α for each input image, the tracking system 21 of the camera 2 is used. The tracking system 21 is configured to establish a position of the camera 2, as well as the orientation of the camera 2 that is defined by the orientation of the optical axis o̅. A 3D model of the LED wall 11 is stored in the storage unit 32 of the system 3. The processing unit 31 is configured to receive information on the position and orientation of the camera 2 (that is preferably determined by means of the tracking system 21) and the 3D model of the LED wall 11, and to determine the (LED wall) viewing angle α based on the position and orientation of the camera 2 and the 3D model of the LED wall 11. Alternatively, the storage unit 32 stores the normal vector n̅ of the LED wall 11. In this case, the processing unit 31 is configured to receive information on the position and orientation of the camera 2 and the normal vector n̅, and to determine the LED wall viewing angle α based on the position and orientation of the camera 2 and the normal vector n̅.

It is noted that the above disclosure explains the determination of one LED wall viewing angle α based on the position and orientation of the camera 2 and the normal vector n̅. The determination of one LED wall viewing angle α for the entire LED wall 11 may be sufficient if the camera 2 is located at a great distance from the LED wall 11, so that the entire LED wall 11 essentially appears under one viewing angle α. If the camera 2 is placed relatively close to the LED wall 11, the LED wall viewing angle α will vary significantly over the camera's field of view and the corresponding input image frame. In these cases, it is preferred that the LED wall viewing angle α is determined for a multitude of positions of the LED wall 11, preferably for each LED wall pixel 13 individually. When the following description refers to a viewing angle α for the sake of brevity and clarity, it is to be understood that multiple viewing angles α may be determined at a given position and pose of the camera 2. Preferably, the viewing angle α is determined for each LED wall pixel 13 individual, and the adjustment of the appearance of the LED wall 11 based on the LED wall viewing angle α is carried out for each LED wall pixel 13 individually.

Based on the LED wall viewing angle α, the processing unit 31 creates display signals for use by the LED wall controller 15. The display signals may be transmitted to the LED controller 15 via the communication unit 33 of the system 3. The display signals may comprise image data for display on the LED wall 11, together with adjustment control signals, that effect the LED wall controller 15 to adjust the image data based on the adjustment control signals, in order to adjust the brightness and/or color and/or color balance of the LED wall 11 in dependence of the LED wall viewing angle α of the camera 2. Alternatively, the processing unit 31 modifies the image data in consideration of the LED wall viewing angle α of the camera 2. The modified image data is then sent to the LED wall controller 15 for display on the LED wall 11.

The creation of the adjustment control signals and/or the modified image data may be based on a calibration function that is dependent on the viewing angle α. The calibration function preferably contains numerical values indicating a ratio of the brightness and/or intensity of the LED wall pixels 13 or the color LEDs 14 that is observed under a reference viewing angle (for example, 0°) and under a viewing angle α. That is, the calibration function may be configured to have the value 1 for a viewing angle value of 0°, and values different from 1 (usually <1) for viewing angle values different from 0°. Alternatively, the calibration function comprises gain factors. For a viewing angle value of 0°, the gain factor may be set as 1, and for viewing angles different from 0°, a gain factor different from 1 (usually >1) may be used.

The calibration function may be a scalar function indicating brightness ratios in dependence of the viewing angle α. Alternatively or additionally, the calibration function may indicate a vector of intensity ratios for different color channels of the LED wall 11, i.e. for each type r, g, b of color LED 14. If the values of the calibration function are provided as gain factors, the gain factors may be based on the inverse of the intensity ratios.

The calibration function may be provided as a lookup table with value pairs of viewing angle α and corresponding calibration function value. alternatively, the calibration function may be provided as analytic function, e.g. a polynomial function or the like.

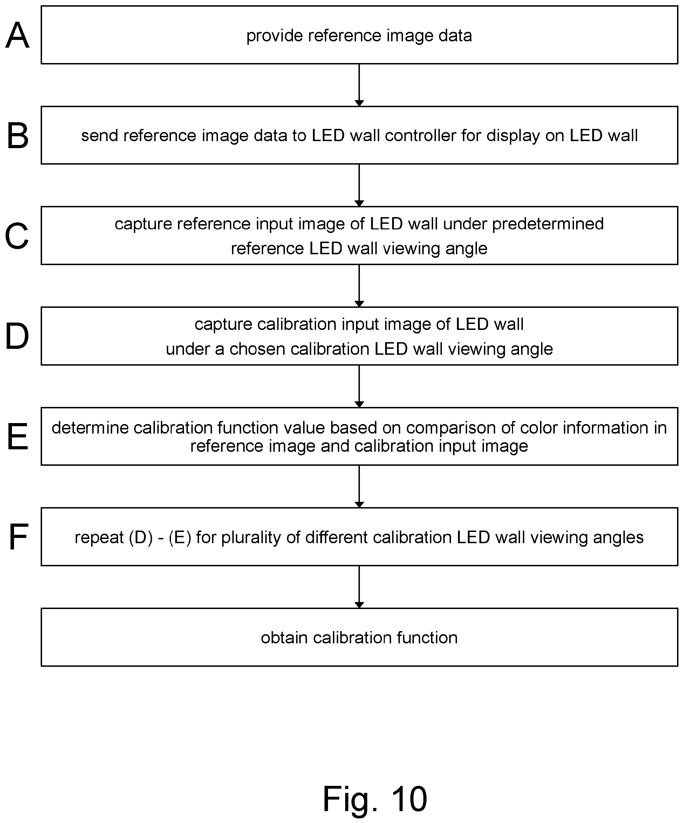

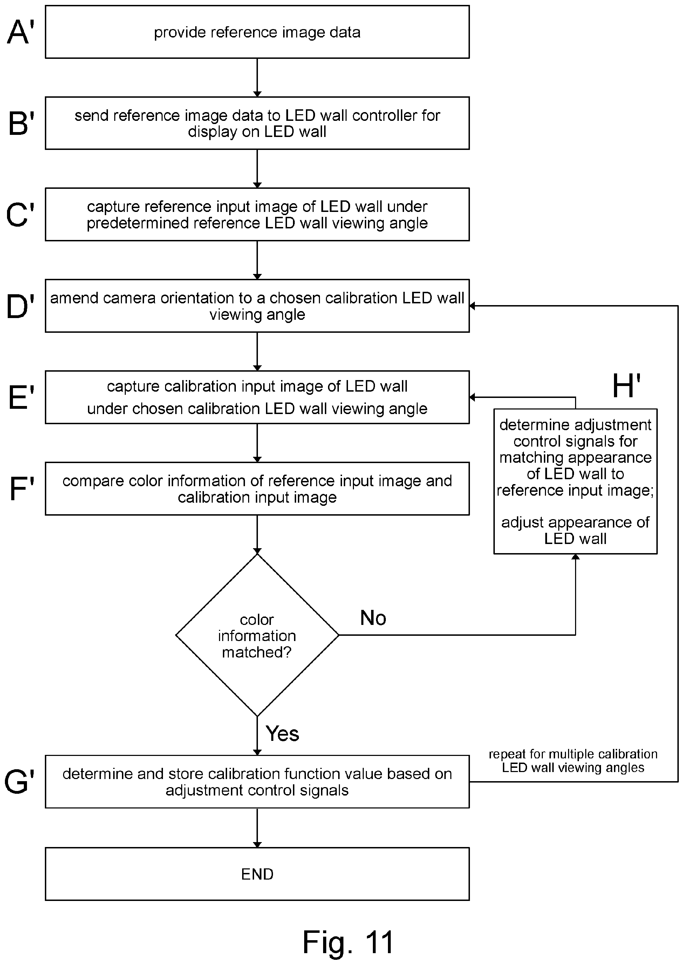

In order to determine the calibration function, reference image data is sent to the LED wall controller 15 for display on the LED wall 11. A reference input image is captured with the camera under a viewing angle of 0°. The brightness and/or color and/or color balance and/or intensity of the individual color channels (e.g. r, g and b) is determined for areas of the reference input image depicting the LED wall 11. Preferably, the area of the reference input image is chosen sufficiently small to accurately represent a discrete value of the LED wall viewing angle α. Then, further calibration input images are captured under different viewing angles, and the brightness and/or color and/or color balance and/or intensity of the individual color channels (e.g. r, g and b) is determined for areas of the input image depicting the LED wall 11. Preferably, the area of the calibration input images is chosen sufficiently small, in correspondence with the area chosen in the reference input image, to again accurately represent a discrete value of the LED wall viewing angle α. Based on the determined values, values for the calibration function at the different viewing angles may be obtained. In order to arrive at a calibration function with sufficient granularity, either a great number of input images for different viewing angles has to be taken, or the calibration function values obtained for different viewing angles are interpolated. During the determination of the calibration function, the appearance of the LED wall may be kept constant, or be systematically adjusted for the creation of the calibration function. Both concepts will be explained in greater detail below with reference to Fig. 10 and Fig. 11.

The viewing angle α may be determined as the 3D angle between camera orientation o̅ and normal vector n̅. The performance of the image correction method based on the calibration function can be considerably improved if the viewing angle is determined along reference planes that take into account the actual configuration of the LED wall pixels 13. The calibration function may be configured differently for viewing angles in different reference planes.

For example, if the LED wall pixels 13 have an essentially rectangular configuration as shown in Fig. 4a, two principal reference directions of interest are the vertical direction along which the color LEDs 14 of an individual LED wall pixel 13 are aligned, and the horizontal direction along which the individual LEDs extend. These reference directions are indicated in Fig. 4a as dotted lines. Corresponding reference directions for the circular LED wall pixel configuration of Fig. 4b are depicted in Fig. 4b accordingly.

When working with a LED wall comprising LED wall pixels 13 of the rectangular type, as shown in Fig. 4a, the changes of the LED wall appearance with varying viewing angle will be qualitatively different depending on whether the viewing angle is varied in a horizontal plane or in a vertical plane. A variation of the viewing angle in a horizontal plane will yield a substantially equal brightness variation for all three color LEDs 14 of each LED wall pixel 13. Thus, when varying the viewing angle in a horizontal plane, the brightness of the LED wall 11 will vary, but there should be no significant color shift if the light distribution of each individual LED pixel 13 is substantially the same.

Conversely, when varying the viewing angle in a vertical plane, the color LEDs 14 will partially obscure each other, leading to different intensity variations for the individual LED colors r, g and b. Thus, it is to be expected that, in this case, even if the light distribution for individual LED wall pixels 13 is substantially the same, due to partial obscurement of individual pixels, their angle dependent light distribution will not be the same. Therefore, a color shift will also become noticeable, and/or the color balance will vary much stronger than in the horizontal case.

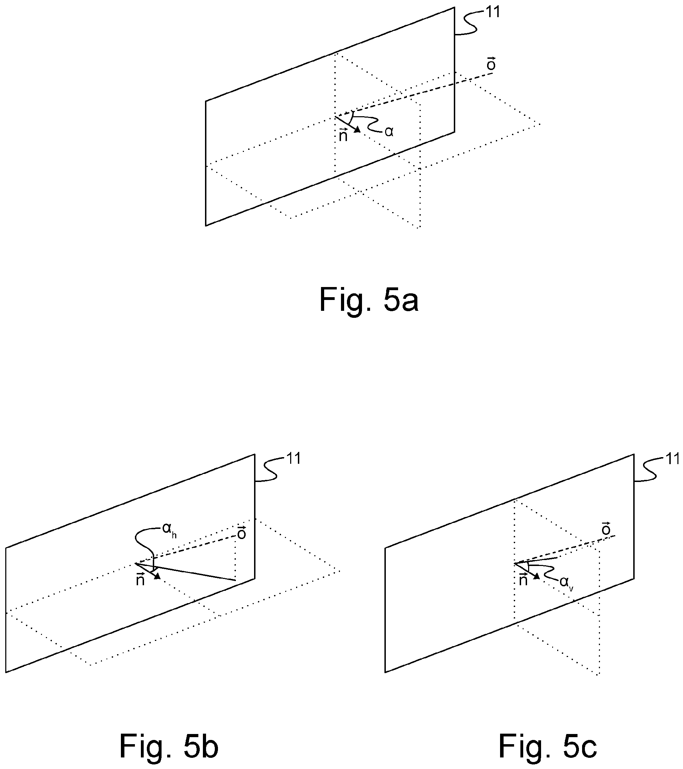

This effect may be taken into account by providing a calibration function that comprises multiple calibration functions for the different color channels, and that also distinguishes between different reference directions or orientations. This is schematically depicted in Fig. 5a-c. In other words, it is preferred that the calibration function is not dependent on a scalar value of the (3D) LED wall viewing angle α, but is a function of multiple viewing angles under different reference orientations.

Fig. 5a-c show a schematic representation of the LED wall 11 with its normal vector n̅. For the sake of clarity, the camera 2 is not shown in Fig. 12a-c, but only the camera's optical axis o̅ that defines the viewing direction (or orientation) of the camera 2. The LED wall 11 shown in Fig 5a-c comprises LED wall pixels 13 of the rectangular configuration, as shown in Fig. 4a.

The viewing angle may be determined as the three-dimensional angle α between the camera's optical axis o̅ and the normal vector n̅ of the LED wall 11, as indicated in Fig. 5a.

In order to better account for the effect of varying viewing angle on the LED wall appearance, it is preferred to base the calibration function not on the (absolute or 3D) viewing angle α shown in Fig. 5a, but to account for a vertical and horizontal reference direction that correspond to the configuration of the LED wall pixels 13.

As explained above with reference to Fig. 4a, for LED wall pixels with a rectangular configuration, the vertical and horizontal direction are favorable reference directions for defining the calibration function, since the variation in appearance of these LED wall pixels with variable viewing angle strongly differs for these reference directions. Accordingly, it is preferable to configure the calibration function to depend on viewing angles within corresponding reference planes.

This is illustrated in Fig. 5b and 5c. In Fig. 5b, the optical axis o̅ is projected onto a horizontal plane illustrated by dotted lines. The angle between the normal vector n̅ of the LED wall 11 and the projection of the optical axis o̅ onto the horizontal plane is determined as horizontal viewing angle αₕ. The calibration function is configured to be dependent on the horizontal viewing angle αₕ. Different parameters of the calibration function can be made dependent on the horizontal viewing angle αₕ. Preferably, the brightness of individual color channels is made dependent on the horizontal viewing angle αₕ.

In Fig. 5c, the optical axis o̅ is projected onto a vertical plane illustrated by dotted lines. The angle between the normal vector n̅ of the LED wall 11 and the projection of the optical axis o̅ onto the vertical plane is determined as vertical viewing angle αᵥ. The calibration function is configured to be dependent on the vertical viewing angle αᵥ. Different parameters can be adjusted based on the calibration function in dependence on the vertical viewing angle αᵥ. Preferably, the brightness of the individual color channels, i.e. the brightness of all color LEDs 14 of identical color is adjusted in dependence of the vertical viewing angle αᵥ.

It is further preferred that the viewing angles αₕ and αᵥ are not determined as absolute values, but with a sign, in order to distinguish between left and right viewing direction for the horizontal viewing angle αₕ, and between upward and downward viewing direction for the vertical viewing angle αᵥ. The calibration function is preferably not symmetrical with respect to the positive and negative values of the viewing angle. This further improves the accuracy of the calibration function and the quality enhancement obtainable with the correction of the input images based on the viewing angle(s).

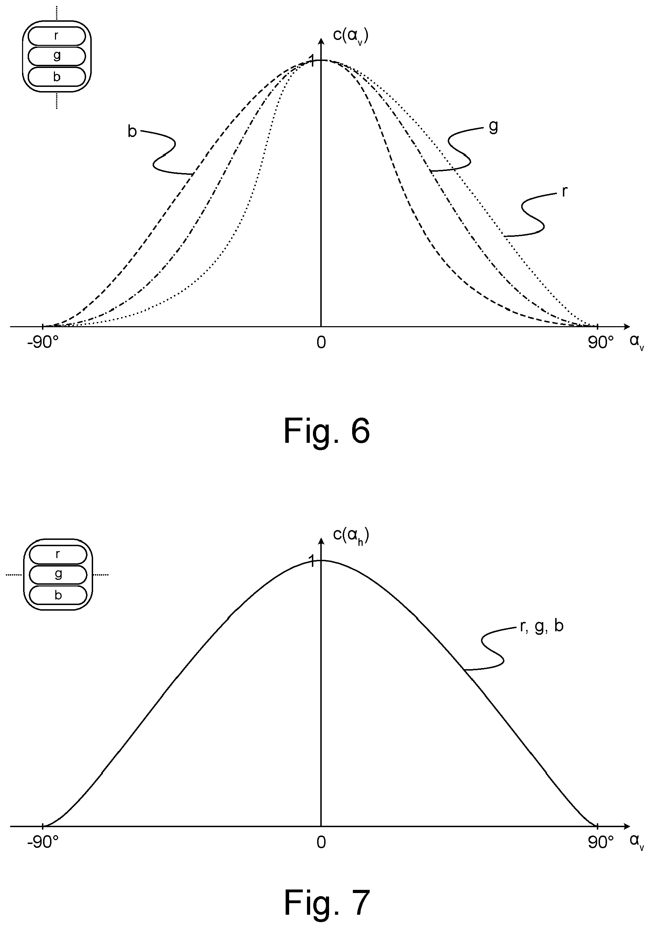

Fig. 6 shows an example for calibration function profiles in dependence of the vertical LED wall viewing angle αᵥ for the individual color channels of a LED wall 11 with LED wall pixels 13 configured in accordance with Fig. 4a. For ease of reference, the principal configuration of the LED wall pixels 13 is schematically depicted in the upper left corner of Fig. 6, with the vertical reference axis being indicated by a dotted line.

The profile of the calibration function for the vertical LED wall viewing angle αᵥ varies for the different color channels. The calibration function for the vertical LED wall viewing angle αᵥ may thus be expressed as a three-component vector, with one component for each color channel r, g and b.

In the graph of Fig. 6, positive values of αᵥ designate a viewing angle at which the camera 6 looks down upon the LED wall 11, whereas negative values indicate a position and orientation of the camera 2 in which the camera 2 looks up towards the LED wall 11.

The calibration functions for the individual color channels are labelled r, g and b for red, green and blue, respectively, and indicated by a dotted line for the r channel, a dash-dotted line for the g channel and a dashed line for the b channel, respectively.

For the green channel, the calibration function is essentially symmetrical. The reason for this lies in the fact that, when varying the vertical LED wall viewing angle αᵥ towards positive values (i.e. when looking down at the LED wall 11 from an elevated position), the brightness of the green color LEDs of each LED pixel 13 will decrease due to the angle dependent emission pattern of the green color LEDs, but also due to the fact that the red color LEDs that are located above the green color LEDs in each LED pixel 13 will partly obscure the green color LEDs and thus reduce their brightness.

When varying the vertical LED wall viewing angle αᵥ towards negative values (i.e. when looking up at the LED wall 11 from a lower position), the brightness of the green color LEDs of each LED pixel 13 will again decrease due to the angle dependent emission pattern of the green color LEDs, but also due to the fact that the blue color LEDs that are located below the green color LEDs in each LED pixel 13 will partly obscure the green color LEDs and thus reduce their brightness.

Since the arrangement of the red and blue color LEDs is symmetrical with respect to the position of the green color LEDs along the vertical direction, the partial obscurement of the green color LED by the other color LEDs within the same LED pixel is symmetrical in the vertical direction. This yields a symmetrical calibration function for the green color channel.

The calibration function for the red channel decreases faster for negative values of αᵥ than for positive values. The reason for this is that, when varying the vertical LED wall viewing angle αᵥ to negative values, the red color LED in each LED wall pixel 13 will be partially obscured by the green color LED of the same LED wall pixel 13 that is arranged at a small distance to the red color LED. When varying the vertical LED wall viewing angle αᵥ to positive values, the red color LED will only be partially obscured by the blue color LED of the LED wall pixel 13 above, which is arranged at a greater distance than the color LEDs within the same LED wall pixel. Thus, the partial obscurement of the red color LED with increasingly positive vertical LED wall viewing angle αᵥ is less pronounced, which leads to a less pronounced decrease in brightness of the red channel and, thus, a slower decrease of the calibration function for the red channel on the positive side of the calibration function.

The calibration function of the blue channel has a behavior essentially inverse to that of the red channel. That is, the calibration function for the blue channel decreases faster for positive values of αᵥ than for negative values. When varying the vertical LED wall viewing angle αᵥ to positive values, the blue color LED in each LED wall pixel 13 will be partially obscured by the green color LED of the same LED wall pixel 13 that is arranged at a small distance to the blue color LED. When varying the vertical LED wall viewing angle αᵥ to negative values, the blue color LED will only be partially obscured by the red color LED of the LED wall pixel 13 below, which is arranged at a greater distance than the color LEDs within the same LED wall pixel. Thus, the partial obscurement of the blue color LED with increasingly negative vertical LED wall viewing angle αᵥ is less pronounced, which leads to a less pronounced decrease in brightness of the blue channel and, thus, a slower decrease of the calibration function for the blue channel on the negative side of the calibration function.

Fig. 7 shows an example for calibration function profiles in dependence of the horizontal LED wall viewing angle αₕ for the individual color channels of a LED wall 11 with LED wall pixels 13 configured in accordance with Fig. 4a. For ease of reference, the principal configuration of the LED wall pixels 13 is schematically depicted in the upper left corner of Fig. 7, with the horizontal reference axis being indicated by a dotted line.

It can be seen that the calibration function is essentially symmetrical for all three color channels and essentially identical for all three color channels. Obviously, when varying the LED wall viewing angle within the horizontal plane, the brightness variation of the individual color LEDs in each LED wall pixel is effected mainly by the angle dependent emission pattern of the individual LEDs. The obscurement by neighbouring LEDs is only effected by LEDs from horizontally adjacent LED wall pixels, which are arranged at a larger distance than the distance between the color LEDs within the same LED wall pixel. For this reason, the decrease of the calibration function with increasing magnitude of the horizontal LED wall viewing angle αₕ is moderate.

It should be noted at this point that the calibration functions depicted in Fig. 6 and 7 merely constitute examples for suitable calibration functions in the context of the present invention. The calibration function values in Fig. 6 and 7 essentially give the quotient of the brightness of the individual color channels perceived at a given LED wall viewing angle and the brightness perceived a LED wall viewing angle of 0°. Since the brightness usually decreases with increasing deviation of the LED wall viewing angle from 0°, the values of the calibration functions in Fig. 6 and 7 lie in the interval between 0 and 1. In other embodiments, the calibration function values are constituted by gain values indicating which gain has to be applied to the respective color channels at a given LED wall viewing angle to match the color at the reference viewing wall angle (of, for example, 0°). In this embodiment, the calibration function values effectively represent the inverse of the calibration function values shown in Fig. 6 and 7.

The calibration function values for the individual color channels and/or individual reference orientations can be used by the processing unit 31 to create display signals for transmission to the LED wall controller 15, as explained above. As an example, the processing unit 31 may be configured to determine the LED wall viewing angle(s) (i.e., the absolute 3D wall viewing angle α, or different LED wall viewing angles for different reference orientations such as αₕ and αᵥ), preferably individually for a plurality of different LED wall pixels 13, further preferably for each LED wall pixel 13 individually. Subsequently, the processing unit 31 is configured to determine a corresponding value of the calibration function for each color channel. In some embodiments, the processing unit 31 is configured to calculate the inverse of the calibration function value for each color channel and use these inverse values as gain factors for the individual color channels. In other embodiments, as mentioned above, the calibration function values are constituted by gain values, so that they can be directly used as gain values. The gain factors may then be sent as adjustment control signals, together with image data, to the LED wall controller 15, so that the LED wall controller 15 is enabled to modify the image data based on the adjustment control signals to obtain modified image data for display on the LED wall 11. Alternatively, the processing unit 31 is configured to modify the image data based on the calibration function values, preferably by multiplying the brightness values of the individual color channels for each LED wall pixel 13 in the image data with a corresponding viewing angle-dependent gain factor to obtain modified image data. This modified image data is then sent to the LED wall controller 15 as display data, so that the LED wall controller 15 is not required to further adjust the display data.

The LED wall viewing angle dependent adjustment of the LED wall appearance minimizes or eliminates changes in appearance of the LED wall 11 in the input images of the camera 2 with varying LED wall viewing angle. The system 3 may be further configured as an image processing system 3, that is configured to digitally augment the input images of the LED wall 11 by determining augmenting areas 4 in the input images, by providing virtual content image data, and generating digitally augmented output images by augmenting the input images with virtual content image data at least in the augmenting areas 4.

In a preferred embodiment shown in Fig. 1 and 2, the storage unit 32 contains a 3D model of the LED wall 11. When capturing an input image, the corresponding position and orientation of the camera 2 is established with the tracking system 21. This allows to calculate the image position of the LED wall 11 in the input image shown in Fig. 2 based on the 3D model of the LED wall 11 and the established position and orientation of the camera 2. The augmenting area 4 may then be determined based on the calculated image position of the LED wall 11 in the input image.

If the system 3 is configured as an image processing system 3 as described above, it may be preferable to further enhance the quality of the digitally augmented images by taking into account a vignetting effect of the camera 2 when providing the virtual content image data and/or generating the digitally augmented output image. In order to achieve this, a vignetting model of the camera 2 may be stored in the storage unit 32, in order to provide it to the processing unit 31 when digitally augmenting the camera input images.

The vignetting effect of the camera 2 may thus be taken into account in the context of the present invention by provision of a vignetting model that models the vignetting effect of the camera 2. This allows for a correction of the vignetting effect in (input) images captured by the camera 2 in order to obtain devignetted camera images, and/or for an application of the vignetting effect to virtual content image data. Alternatively, the vignetting model may be used to modify the display data that is sent to the LED wall controller 15 such that the vignetting effect of the camera 2 in the input images is annulated.

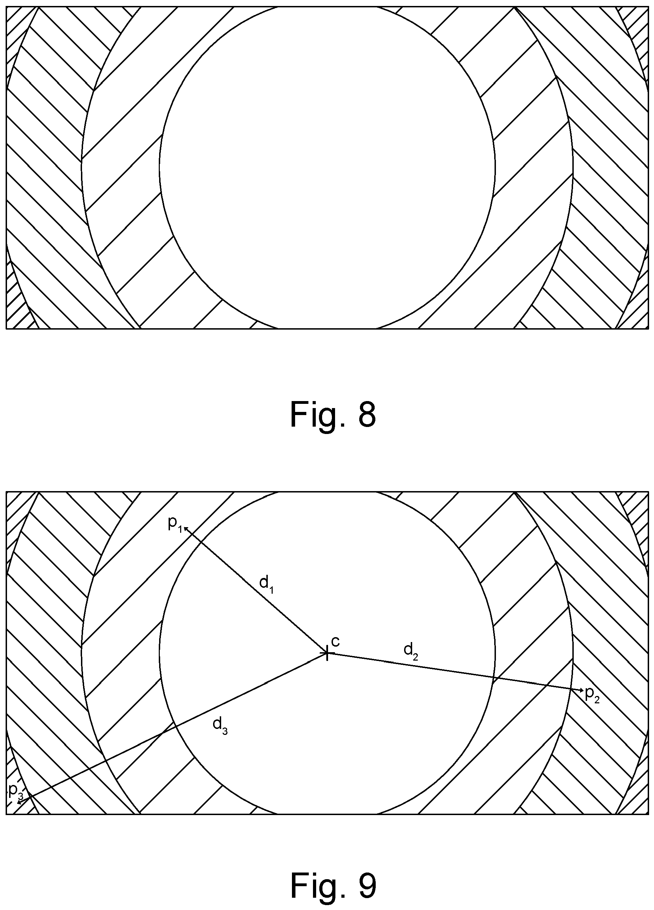

The vignetting model is stored in the storage unit 32. It quantifies the reduction in brightness and/or saturation for each position in the image frame. The vignetting model of the camera 2 is configured to quantify a brightness and/or saturation reduction at each position in the image frame of the camera 2 which is effected by the camera 2, in particular the limited aperture of its lens system. A typical vignetting effect encountered in a camera 2 with a lens system is schematically depicted in Fig. 8. An area around the image frame center, up to a certain radial distance, may not exhibit any noticeable vignetting, whilst areas at the periphery of the image frame are increasingly reduced in brightness and/or saturation, as indicated by an increased hatching density in Fig. 8. It is noted that lens systems of cameras may also give rise to vignetting effects in which areas with a stronger vignetting effect are located at the center of the image frame, and the vignetting effect is reduced with increasing distance from the image center.

The vignetting model can be configured by a lookup table, in which a vignetting value, which quantifies the brightness and/or saturation reduction, is contained for each pixel of the image frame. In order to determine the vignetting value for a position in the image frame of the camera 2, the corresponding pixel coordinate is identified in the lookup table and the corresponding vignetting value is retrieved.

Alternatively, the vignetting model can be provided as a (scalar) function that indicates the vignetting value as a function of (radial) distance d from an image center c of the image frame. Fig. 9 schematically illustrates such a vignetting model. The image center c is depicted, along with three exemplary image (frame) positions p₁, p₂, p₃. In order to determine the vignetting value for the image frame positions p₁, p₂, p₃, the respective distance di, d₂, d₃ to the image frame center c is determined and the corresponding vignetting value is determined from the scalar function contained in the vignetting model. The image position p₁ has the smallest distance d₁ to the center c and thus exhibits the lowest vignetting effect. The highest vignetting effect is obtained for image position p₃ which lies in the left bottom corner of the image frame and has the highest distance d₃ to the image center c.

The vignetting model may be constituted by a linear function, a polynomial function of order n or any other function that is suitable to model the vignetting effect of the camera 2. An asymmetric alignment of the lens system of the camera 2 relative to the image sensor can be accounted for by an offset of the image frame center c that can be provided in the vignetting model.

The vignetting values are preferably numerical values in the interval [0;1], with 0 indicating a complete obscuration of the corresponding image position, and 1 indicating no brightness reduction at all (or the least brightness reduction relative to other image positions).

It is preferable that the vignetting model accounts for different aperture sizes of the camera 2. For this, the vignetting model preferably comprises a plurality of vignetting models for different aperture sizes of the camera 2.

The vignetting model stored in the modelling unit 32 can be used in various ways to improve the quality of the digitally augmented output images.

In the scenario shown in Fig. 1 and 2, the determination of the augmenting area 4 is comparatively simple. In this scenario, it is preferable to use the vignetting model to modify the virtual content image data in order to reduce visual artefacts in the digitally augmented output image.

In order to provide a digitally augmented output image of high quality, it has to be ensured that the virtual content image data matches the image data in the region of interest 1 of the input image in brightness and/or saturation (and, possibly, camera LUT). If the brightness and/or saturation of the virtual content image data differs from that of the image data in the region of interest 1 in the input image, a visible seam will be obtained in the border areas between the region of interest 1 and the augmenting area 4.

Due to the vignetting effect of the camera 2, noticeable discontinuities in brightness and/or saturation may be encountered when augmenting the input image of Fig. 2 with virtual content image data in the augmenting area 4 without properly taking the vignetting effect of the camera 2 into account. The image data contained in the input image is obviously subjected to the vignetting effect of the camera 2 due to the fact that the input image is captured with the camera 2.

In order to allow for a seamless complement of the input image with virtual content image data, the processing unit 31 is configured to receive the vignetting model from the modelling unit 32. The processing unit 31 is configured to create the virtual content image data for augmentation of the input image by applying a vignetting effect based on the vignetting model to the virtual content image data. Herein, the designated position of each pixel of the virtual content image data in the image frame may be determined, and the brightness and/or saturation value of each pixel of the virtual content image data may be modified based on the vignetting model. If a vignetting model with vignetting values between 0 and 1 is used, as detailed above, the modification based on the vignetting model may comprise a multiplication of the brightness and/or saturation value of each pixel of the virtual content image data with the corresponding vignetting value.

Through application of a vignetting effect to the virtual content image data that is based on the vignetting model of the camera 2, the virtual content image data is modified in the same way as if being captured by the camera 2. A subsequent augmentation of the input image with the modified virtual content image data yields a digitally augmented output image with enhanced quality, since visual artefacts at the border between the region of interest 1 and the augmenting area 4 are suppressed.

Fig. 10 shows a flow diagram representing the creation of a viewing angle dependent calibration function according to a preferred embodiment of the present invention. In step A, reference image data is provided in the system 3. The reference image data is then sent to the LED wall controller 15 for display on the LED wall 11 (step B). The reference image data is constantly displayed for the further process, in order to ensure a constant appearance of the LED wall 11 (which will, however, still vary with varying LED wall viewing angle α). It is particularly preferred that the reference image data is configured such that the same color with uniform brightness is displayed on the entire LED wall 11. Alternatively, the reference image data is configured such that the reference image data is only displayed in a confined area of the LED wall 11, whilst the rest of the LED wall 11 is kept dark. The following process for creating a viewing angle dependent calibration function may be carried out for each color channel of the LED wall 11 separately. In this case, it is preferable that the reference image data is configured such that a color corresponding to the color channel in question is displayed with uniform brightness on the LED wall 11.

A reference input image of the LED wall 11 is then captured with the camera 2 under a predetermined reference LED wall viewing angle α₀, preferably at a viewing angle of 0° for a center part of the reference input image (step C). Subsequently, the viewing angle α of the camera 2 is amended to a calibration LED wall viewing angle for which a value of the calibration function is to be determined. A calibration input image of the LED wall under the chosen calibration LED wall viewing angle is captured (step D). In order to determine a calibration function value for the chosen calibration LED wall viewing angle, color information in a part of the reference input image showing an area of the LED wall 11 that displays the reference image data is compared to color information in a part of the calibration input image. Preferably, the parts of the reference input image and the calibration input image to be compared are chosen sufficiently small to accurately represent a discrete LED wall viewing angle. Further preferably, the parts are chosen such that they depict a corresponding area of the LED wall 11. Based on the comparison, a value of the calibration function for the chosen calibration LED wall viewing angle is determined. If, for example, the calibration LED wall viewing angle is chosen such that the perceived brightness of one or more color channels of the LED wall pixels 13 is reduced, the comparison of the color information in a (central) part of the reference input image and the (corresponding) part of the calibration input image may be performed by dividing the brightness values of individual color channels in the compared parts of reference and calibration input image. This yields a ratio of the brightness and/or intensity of the compared color channels, or a gain factor for the compared color channels, as discussed previously.

Steps D and E are subsequently repeated for a plurality of different calibration LED wall viewing angles (step F). The plurality of calibration function values for the different chosen calibration LED wall viewing angles yields the calibration function (which may further be complemented by interpolating intermediate values for LED wall viewing angles that have not been chosen as calibration LED wall viewing angles).

After creating the viewing angle dependent calibration function for a specific color channel, the method steps shown in Fig. 10 may be repeated for another color channel of the LED wall 11, in order to obtain viewing angle dependent calibration functions for the individual color channels, such as the ones exemplarily shown in Fig. 6 and 7.

Fig. 11 shows a flow diagram for an alternative method to obtain the calibration function. Instead of deriving calibration function values from the comparison of input images taken of the LED wall 11 under the same appearance, the appearance of the LED wall 11 when the camera is oriented at a calibration LED wall viewing angle is varied until the appearance matches that of the LED wall 11 in the reference input image. The calibration function value is then based on the corresponding adjustment control signals used to match the appearance of the LED wall 11.

Steps A' to C' correspond to steps A to C of the flow diagram of Fig. 10, so their description is not re-iterated. After capturing the reference input image, the orientation of the camera 2 is amended to a chosen calibration LED wall viewing angle, for which a calibration function value is to be determined (step D'). Subsequently, a calibration input image of the LED wall 11 under the chosen calibration LED wall viewing angle is captured (step E'). The color information of the reference input image and the calibration input image is compared in step F', in a manner analogous to that of step E in Fig. 10, i.e., color information in a part of the reference input image is compared to color information in a (corresponding) part of the calibration input image.

In contrast to the process depicted in Fig. 10, however, the calibration function value is not determined from this comparison. Rather, the comparison is carried out to determine whether the color information in a part of the reference input image matches to color information in a (corresponding) part of the calibration input image. A match is determined if the difference in color information, e.g., a difference in brightness of individual color channels, falls below a predetermined threshold. Due to the variation in LED wall viewing angle, this will usually not be the case.

If no match in color information is found, the system 3 is configured to determine adjustment control signals based on the determined difference in color information. The adjustment control signals are determined to match the appearance of the LED wall 11 at the chosen calibration LED wall viewing angle to the appearance of the LED wall 11 at the reference LED wall viewing angle. If, for example, the calibration LED wall viewing angle is chosen such that the perceived brightness of one or more color channels of the LED wall pixels 13 is lower than in the reference input image, the adjustment control signals are determined to compensate the brightness difference.

The determined adjustment control signals are used to modify the reference image data - either by sending the adjustment control signals to the LED controller 15 which adjusts the reference image data and outputs the modified image data to the LED wall 11, or by adjusting the reference image data in the processing unit 31 and sending the modified reference image data to the LED wall controller 15 for display on the LED wall 11 (Step H').

A further calibration input image of the LED wall 11 depicting the modified reference input image data is captured, and the color information in the new calibration input image is compared to that of the reference input image. If the difference in color information is above the predetermined threshold, step H' is repeated. If the difference in color information is below the predetermined threshold, a calibration function value based on the adjustment control signals is determined and stored (step G'). Method steps D' to H' are then repeated until a sufficient number of calibration function values for different LED wall viewing angles has been determined. Further calibration function values may be determined by interpolating additional calibration function values for LED wall viewing angles that have not been chosen as calibration LED wall viewing angles.

As with the method illustrated in Fig. 10, the method of Fig. 11 may be carried out for individual color channels of the LED wall 11 separately.

### List of reference signs

- 1: region of interest
- 11: LED wall
- 12: person
- 13: LED wall pixel
- 14: color LED
- 15: LED wall controller
- 2: camera
- 21: tracking system
- 3: (control / image processing) system
- 31: processing unit
- 32: storage unit
- 33: communication unit
- 4: augmenting area
- pₓ: image (frame) position
- dₓ: distance from image center
- c: image (frame) center
- o̅: optical axis
- n̅: LED wall surface normal
- α: LED wall viewing angle
- αₕ: horizontal LED wall viewing angle
- αᵥ: vertical LED wall viewing angle

## Claims

1. Method, preferably computer-implemented method, for controlling the appearance of a LED wall (11) dependent on a viewing angle of a camera (2) relative to the LED wall (11), the method comprising:
h) determining a LED wall viewing angle (α, αₕ, αᵥ) of the camera (2) relative to the LED wall (11); and
i) adjusting the appearance of the LED wall (11) based on the determined LED wall viewing angle (α, αₕ, αᵥ).

2. Method, preferably computer-implemented method, for creating digitally augmented camera images based on input images containing image data of a LED wall (11) captured with a camera (2), the method comprising:
j) controlling the appearance of the LED wall (11) dependent on the viewing angle of a camera (2) relative to the LED wall (11) according to claim 1;
k) capturing at least one input image containing image data of the LED wall (11) with the camera (2);
I) determining at least one augmenting area (4) in the input image which are to be digitally augmented;
m) providing virtual content image data at least for the at least one augmenting area (4); and
n) generating a digitally augmented output image by augmenting the input image with virtual content image data at least in the at least one augmenting area (4).

3. Method according to claim 1 or 2, wherein determining the LED wall viewing angle (α, αₕ, αᵥ) comprises
• providing a 3D model of the LED wall (11);
• establishing a position and pose of the camera (2), which preferably comprises establishing a position of the camera (2) and an orientation of the optical axis (o̅);
• determining the LED wall viewing angle (α, αₕ, αᵥ) based on the 3D model and the established position and pose of the camera (2), and/or the established position of the camera (2) and orientation of the optical axis (o̅).

4. Method according to any of the preceding claims, wherein adjusting the appearance of the LED wall (11) comprises adjusting the color information of the LED wall (11), preferably by adjusting the brightness of individual color channels of the LED wall (11) based on the determined LED wall viewing angle (α, αₕ, αᵥ).

5. Method according to any of the preceding claims, wherein adjusting the appearance of the LED wall (11) comprises adjusting the brightness of color LEDs (14) of LED wall pixels (13) of the LED wall (11), wherein, preferably, the LED wall viewing angle (α, αₕ, αᵥ) is determined for a plurality of LED wall pixels (13), preferably for each LED wall pixel (13), individually.

6. Method according to any of the preceding claims, wherein the determining of the LED wall viewing angle (αₕ, αᵥ) comprises the determining of a plurality of LED wall viewing angles (αₕ, αᵥ) for different reference orientations.

7. Method according to any of the preceding claims, wherein adjusting the appearance of the LED wall (11) is based on a viewing angle dependent calibration function.

8. Method according to any of the preceding claims, in particular to claim 7, comprising creating a viewing angle dependent calibration function for the adjustment of the appearance of the LED wall (11), wherein, preferably, a viewing angle dependent calibration function is created for at least one, preferably for each color channel of the LED wall (11) separately.

9. Method according to any of the preceding claims, in particular to claim 8, wherein the creation of the viewing angle dependent calibration function comprises
• capturing a reference input image of the LED wall (11) at a predetermined reference viewing angle;
• capturing a plurality of calibration input images of the LED wall (11) at different viewing angles;
• determining calibration function values for the different viewing angles based on comparing the color information of parts of the calibration input images depicting the LED wall with the color information of parts of the reference input image depicting the LED wall.

10. Method according to any of claims 2 to 9, wherein determining the augmenting areas comprises
• providing a 3D model of the LED wall (11);
• establishing a position and pose of the camera (2);
• calculating the image position of the LED wall (11) in the input image based on the 3D model of the LED wall (11) and the established position and pose of the camera (2);
• determining the augmenting areas (4) based on the image position of the LED wall in the input image.

11. Control system for controlling the appearance of a LED wall (11) dependent on a viewing angle of a camera (2) relative to the LED wall (11), preferably by using a method according to any of claims 1 or 3 to 9, the system comprising:
• a processing unit (31) that is configured to
∘ receive image data for display on the LED wall (11);
∘ determine a LED wall viewing angle (α, αₕ, αᵥ) of the camera (2) relative to the LED wall (11);
∘ create display signals for use by a LED wall controller (15) to adjust the appearance of the LED wall (11) based on the image data and the determined LED wall viewing angle (α, αₕ, αᵥ);
• a communication unit (33) that is configured to communicatively couple the digital image processing system (3) to the LED wall controller (15) for controlling the LED wall (11), and to transmit the display signals for adjusting the appearance of the LED wall (11) to the LED wall controller (15).

12. Control system according to claim 11, comprising a storage unit (32) for storing data, preferably for storing a 3D model of the LED wall (11) to be provided to the processing unit (31), further preferably for storing a viewing angle dependent calibration function to be provided to the processing unit (31) for creating the control signals.

13. Digital image processing system (3) for creating digitally augmented camera images based on input images containing image data of a LED wall (11), preferably by using a method according to any of claims 2 to 10, the digital image processing system (3) comprising:
• a control system for controlling the appearance of a LED wall (11) dependent on a viewing angle of a camera (2) relative to the LED wall (11) according to claim 11 or 12;
the processing unit (31) further being configured to
∘ receive an input image from a camera (2);
∘ determine augmenting areas (4) in the input image which are to be digitally augmented;
∘ provide virtual content image data at least for the augmenting areas (4); and
∘ generate a digitally augmented output image by augmenting the input image with virtual content image data at least in the augmenting areas (4).

14. Digital image processing system (3) according to claim 13, wherein the processing unit (31) is configured to
• provide a 3D model of the LED wall (11) that is captured in the input image;
• establish a position and pose of the camera (2);
• calculate the image position of the LED wall (11) in the input image based on the 3D model of the LED wall (11) and the established position and pose of the camera (2);
• determine the augmenting areas (4) based on the image position of the LED wall (11) in the input image.

15. Digital image processing system (3) according to claim 13 or 14, comprising a storage unit (32) for storing data, preferably for storing a 3D model of the LED wall (11) to be provided to the processing unit (31), further preferably for storing a viewing angle dependent calibration function to be provided to the processing unit (31) for creating the display signals.
